# EUROPEAN PATENT SPECIFICATION

(11) **EP 1 388 999 B1**
(45) Date of publication and mention of the grant of the patent: **27.02.2008**
(21) Application number: 02771568.9
(22) Date of filing: 08.05.2002
(51) Int. Cl.: H04M 11/00, H04M 3/42, H04M 3/533, A63F 13/12, G06F 13/00

(54) **ENTERTAINMENT SYSTEM**
UNTERHALTUNGSSYSTEM
MATERIEL RECREATIF

(30) Priority: 18.05.2001 JP 2001150024; 26.03.2002 JP 2002086951
(43) Date of publication of application: 11.02.2004
(73) Proprietor: Sony Computer Entertainment Inc., Tokyo 107-0062 (JP)
(72) Inventor: SHIMAKAWA, Keiso, Sony Computer Entertainment Inc., Minato-ku, Tokyo 107-0062 (JP); HIRAMATSU, Shuji, Sony Computer Entertainment Inc., Minato-ku, Tokyo 107-0062 (JP); SUZUOKI, Masakazu, Sony Computer Entertainment Inc, Minato-ku, Tokyo 107-0062 (JP); OHBA, Akio, Sony Computer Entertain,emt Inc., Minato-ku, Tokyo 107-0062 (JP); OKADA,Toyoshi, Sony Computer Entertainment Inc., Minato-ku, Tokyo 107-0062 (JP); ENOMOTO, Shigeru, Sony Computer Entertainment Inc., Minato-ku, Tokyo 107-0062 (JP); SHIMADA, Muneki, Sony Computer Entertainment Inc., Minato-ku, Tokyo 107-0052 (JP); KAKE, Tomokazu, Sony Computer Entertainment Inc., Minato-ku, Tokyo 107-0062 (JP); KIMOTO, Yousuke, Sony Computer Entertainment Inc., Minato-ku, Tokyo 107-0062 (JP); KOMAKI, Kenjiro, Sony Computer Entertainment Inc., Minato-ku, Tokyo 107-0062 (JP); HORIE, Hiromasa, Sony Computer Entertainment INc., Minato-ku, Tokyo 107-0062 (JP); FUJII, Takahiro, Sony Computer Entertainment Inc., Minato-ku, Tokyo 107-0062 (JP); KIMURA, Yuta, Sony Computer Entertainment Inc., Minato-ku, Tokyo 107-0062 (JP); ONAI, Hidehisa, Sony Computer Entertainment Inc., Minato-ku, Tokyo 107-0062 (JP)
(74) Representative: Müller, Frithjof E.
(86) International application number: PCT/JP2002/004467
(87) International publication number: WO 2002/096083

(56) References cited:
- EP-A- 0 753 836
- WO-A-00/10099
- JP-A- 9 081 781
- JP-A- 11 194 985
- JP-A- 11 203 009
- JP-A- 2001 117 884
- PATENT ABSTRACTS OF JAPAN vol. 1999, no. 12, 29 October 1999 (1999-10-29) & JP 11 194985 A (CASIO COMPUT CO LTD), 21 July 1999 (1999-07-21)
- PATENT ABSTRACTS OF JAPAN vol. 1999, no. 12, 29 October 1999 (1999-10-29) & JP 11 203009 A (SONY CORP), 30 July 1999 (1999-07-30)

## Description

### TECHNICAL FIELD

The present invention relates to an entertainment system and a communication method in accordance with the precharacterizing parts of the independent claims 1 and 9 which are preferably to be applied to, for example, a multiplayer network game system in which a plurality of players log on to a server machine that constructs a virtual world on a network to play video games. An entertainment system and a communication method of that kind are respectively known from EP 0 753 836 A2.

### BACKGROUND ART

Conventionally, there has been in existence an entertainment system, that is, a multiplayer network game system, in which a server machine for processing and distributing various data on games and a plurality of client terminal devices are connected via a communication line, and a plurality of players operate the client terminal devices to play video games.

In this multiplayer network game system (hereinafter, referred to as a network game system), the server machine executes a game program to construct the virtual world, and individually processes information transmitted from a plurality of client terminal devices connected via the communication line. The server machine generates information necessary for execution and progress of individual games, and transmits the individually generated information to each client terminal device.

Here, information to be transmitted from the client terminal device to the server machine, for example, includes information on a position of a virtual character operated by the player within the virtual world and action information thereof. Further, information to be transmitted from the server machine to the client terminal device, for example, includes position or action data of other characters neighboring upon the character directly operated by the player (characters operated by other players).

However, in the foregoing network game system, when transmitting the information to and receiving the information from the virtual world or other characters, the player has to always connect the client terminal device and the server machine via the communication line.

Therefore, when the player is remote from the client terminal device or the client terminal device is not connected to the server machine, transmission of various information to and reception of various information from the virtual world such as, for example, a dialog with the other player via the character, cannot be conducted.

So far, a virtual world constructed by a network game system is a virtual space that is completely separated from the real world and is just a virtual space realized on the server machine, so that the virtual world and the real world cannot be linked with each other.

JP-A-11194985 discloses that a dedicated go-competition server collects information of a specified object and conditions concerning the party of competition as input from a terminal dedicated to go game together with a service-providing request from other competition servers. Thereupon the go-competition server determines the party of competition corresponding to the collected conditions and controls the communication for mutually receiving the provision of the service (match of game) between the determined party registered at the other provider and the service provision requesting terminal dedicated to go game.

EP O 753 836 A2 discloses a communication and entertainment system which comprises a server machine for constructing a virtual world, a terminal device connectable via a communication line to the server machine and adapted to be used by players to operate in the virtual world characters assigned to the players, a log-in player database having stored therein identification information for the terminal device connected to the server machine and
a determination means for determining whether the terminal device of the second player is connected to the server machine by referring to the log-in player database in response to a request from a first player to communicate with a second player, while the first player is operating a character.

The present invention has been made in view of the foregoing problems, and an object thereof is to provide an entertainment system, a communication system, a communication method and a computer-readable recording medium having recorded thereon a communication program all of which are capable of linking a virtual world and a real world.

The above object is solved according to the invention by an entertainment system and a communication method in accordance with the independent claims 1 and 9.

### DISCLOSURE OF THE INVENTION

The present invention controls a bidirectional information communication process from a virtual world to a real world and from the real world to the virtual world. According to such a configuration, a user can transmit various information including sound information to the virtual world and receive various information including sound information from the virtual world wherever he/she is, so that the distance between the virtual world and the real world can be reduced, and the virtual world and the real world can be linked.

### BRIEF DESCRIPTION OF THE DRAWINGS

FIG. 1 is a schematic diagram showing the entire configuration of a network game system according to an embodiment of the present invention;
FIG. 2 is a flow chart showing an operation of the network game system shown in FIG. 1;
FIG. 3 is a flow chart showing another operation of the network game system shown in FIG. 1;
FIG. 4 is a schematic diagram showing a data format of a user database;
FIG. 5 is a schematic diagram showing a telephone number (access number) when voice communication is conducted;
FIG. 6 is a schematic diagram showing a telephone number (access number) when data communication is conducted;
FIG. 7 is a schematic diagram showing the entire configuration of a communication system according to the embodiment of the present invention;
FIG. 8 is a flow chart showing an operation of the communication system shown in FIG. 7; and
FIG. 9 is a flow chart showing an operation of another embodiment of the communication system shown in FIG. 7.

### BEST MODE FOR CARRYING OUT THE INVENTION

### First Embodiment

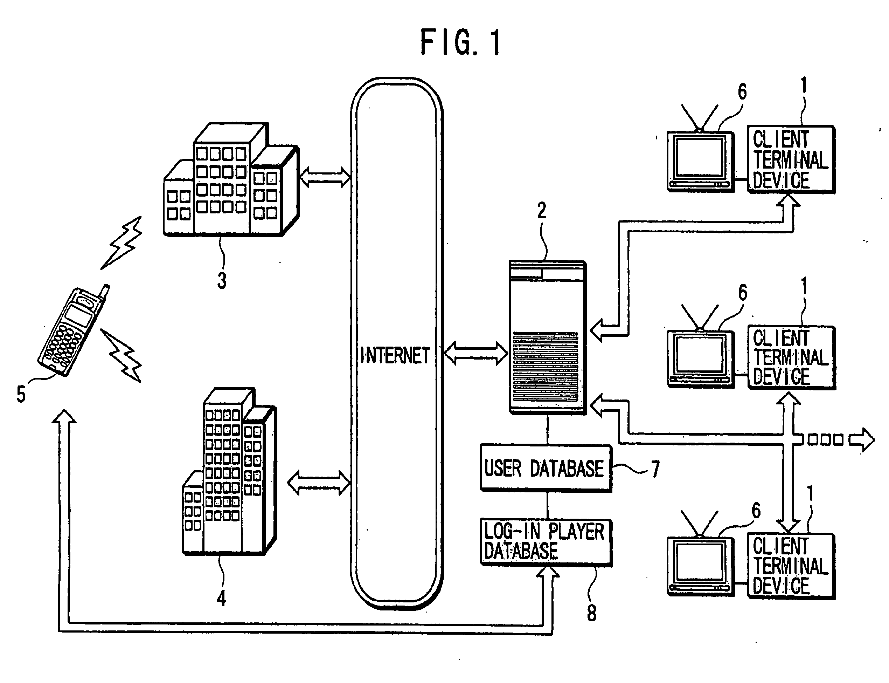

The present invention can be applied to a network game system in which a server machine and a plurality of client terminal devices are connected via a communication line and a plurality of players operate the client terminal devices and play in a virtual world constructed by the server machine, for example, as shown in FIG. 1.

### Constitution of Network Game System

Firstly, with reference to FIG. 1, the entire configuration of a network game system according to an embodiment of the present invention will be explained.

The network game system according to the embodiment of the present invention is configured, as shown in FIG. 1, such that a plurality of client terminal devices 1 are connected via a server machine 2, the Internet, a telephone switching station 3, and an ISP 4 (Internet Service Provider: ISP) to a portable telephone 5.

Each client terminal device 1 is composed of a personal computer having a communication function or a video game machine having a communication function. To each client terminal device 1 is connected a controller for instructing various processes on a network game to the server machine 2, such as log-on to and log-off from the server machine 2 via a communication line, operation control of characters in the virtual world, information input, and the like. When the client terminal device 1 is a personal computer, an input device such as a keyboard, a mouse device or the like is utilized as the controller.

Each client terminal device 1 comprises a sound input device such as a microphone or the like, and a sound output device such as a speaker or the like so as to input and output sound information. Each client terminal device 1 is connected via electrical wiring to an output device 6. Each output device 6 outputs images or sound of the virtual world constructed by the server machine 2, images of characters in the virtual world, and the like in response to an instruction from the client terminal device 1. As the output device 6, for example, a display device or the like is utilized.

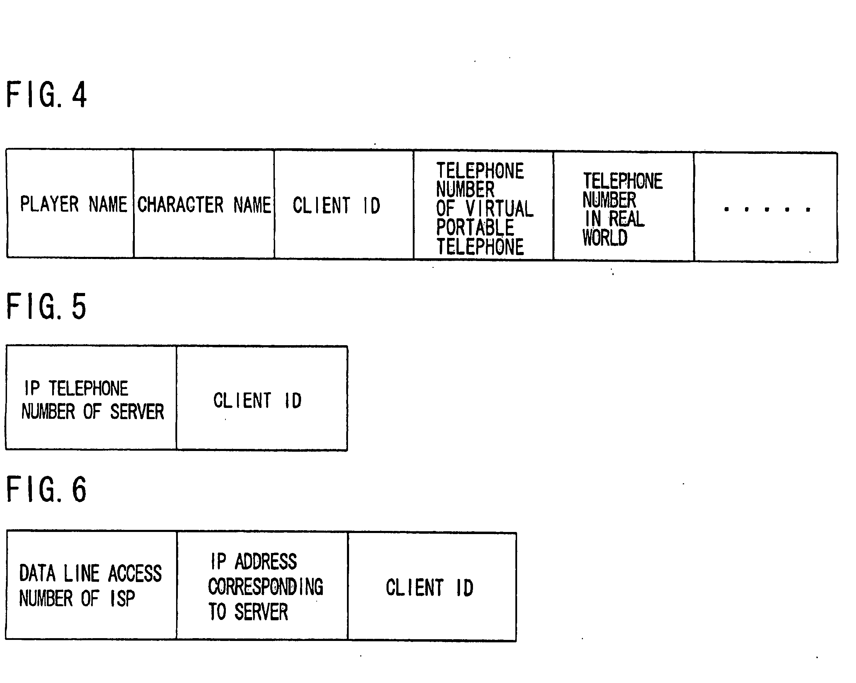

The server machine 2 comprises a user database 7 having stored therein information on the players participating in a network game, such as a player name, an identifier of the player (or the client terminal device 1) (hereinafter, referred to as client ID), a character name operated by the player, a telephone number of the portable telephone owned by the character, a portable telephone of the player in the data format as shown in FIG. 4, and a log-in player database 8 having stored therein the client IDs of the players logging on to the server machine 2.

The telephone switching station 3 comprises a VoIP (VoIP: Voice Over Internet Protocol, so-called Internet Phone) gateway for controlling voice communications between the server machine 2 and the portable telephone 5.

The ISP 4 comprises an Internet server machine for controlling data communications of voice mails, electronic mails and the like between the server machine 2 and the portable telephone 5.

The portable telephone 5 is connected via the telephone switching station 3 or the ISP 4 to the server machine 2. Here, when the server machine 2 *per se* has a function of conducting voice communications or data communications, the portable telephone 5 is directly connected to the server machine 2.

### Communication Operation Between Characters in Virtual World

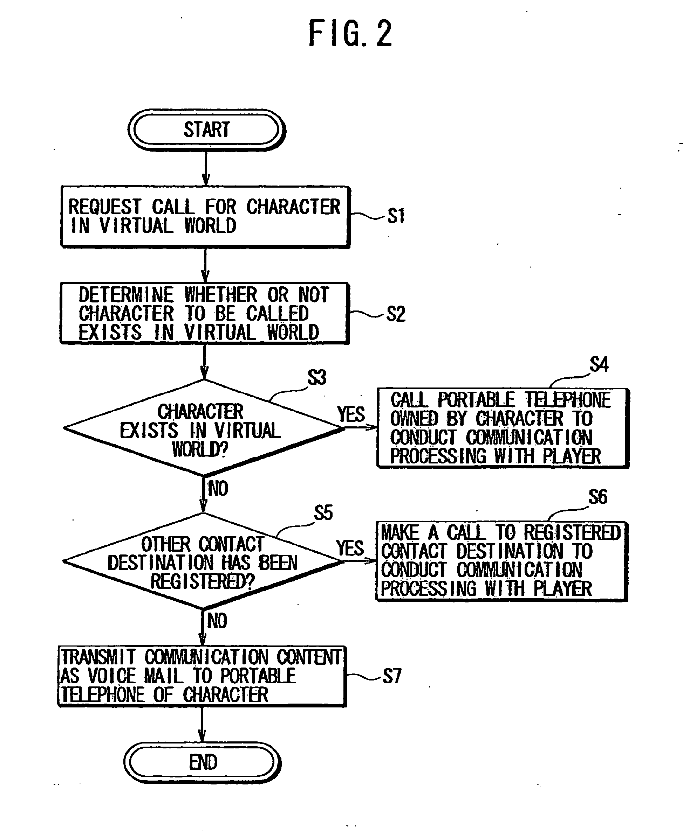

Next, with reference to the flow chart shown in FIG. 2, the operation of the network game system when a communication process is conducted between characters in the virtual world will be explained. In the following operation of the network game system, the server machine 2 constructs the virtual world in which each character in the virtual world has a name and holds a virtual portable telephone in order to communicate with other characters in the virtual world.

The flow chart shown in FIG. 2 starts when the player operates the client terminal device 1 to log on to the server machine 2 and the client terminal device 1 outputs to the output device 6 image and sound of the virtual world and a character image corresponded to the logged-on player which are transmitted from the server machine 2 via the communication line, and the communication process goes to the processing in step S1.

In the processing in step S1, in response to an instruction from the player, the client terminal device 1 requests from the server machine 2 a call to another character in the virtual world. The communication process then goes from the processing in step 1 to the processing in step S2.

Note that the player operates the controller connected to the client terminal device 1 to conduct the processing in step S1. The server machine 2, when receiving a call request to a character from a player, transmits to the client terminal device 1 the image or sound indicating an action such that the character of the player who has requested the call (hereinafter, referred to as the calling party) utilizes his or her portable telephone and makes a call to the portable telephone owned by another character. Thus, the server machine 2 can give the player the illusion that the player him/herself is making call in the virtual world, and it is possible to enhance the reality of the virtual world and the entertainment quality of the network game system.

In the processing in step S2, in response to a call request to the character from the player, the server machine 2 refers to the client ID stored in the log-in player database 8, and checks whether the player operating the character to be called has logged on to the server machine 2, to thereby determine whether the character to be called exists in the virtual world. If it is determined that the character to be called exists in the virtual world, the communication process goes to the processing in step S4.

In the processing in step S4, the server machine 2 transmits to the client terminal device 1 of the player operating the character to be called (hereinafter, referred to as the called party) the image and sound incoming in the portable telephone of the character operated by the called party. Thus, the called party can recognize the communication request. Hereinafter, the called party operates the controller of the client terminal device 1 to conduct voice communication or data communication with the calling party via the portable telephone of the character.

When the character operated by a third party is near the character operated by the calling party or the called party, the server machine 2 may transmit to the client terminal device 1 of the third party the image or sound indicating actions of the character operated by the calling party or the called party, such as, for example, the state in which the character operated by the calling party makes a call or the state in which the character operated by the called party talks over the telephone. According to such a configuration, the third party can confirm the communication process between those other players, and applications such as, for example, participating in a conversation between the calling party and the called party, or listening to the conversation, can be conducted, so that the reality of the virtual world can be more enhanced.

On the other hand, when the character to be called does not exist in the virtual world, the communication process goes to the processing in step S5.

In the processing in step S5, the server machine 2 refers to the user database 7 to determine whether a contact destination of the called party other than the telephone number of the portable telephone owned by the character has been registered in advance. If it is determined that the other contact destination has been registered, the communication process goes to the processing in step S6.

In the processing in step S6, the server machine 2 calls the called party by voice communication or data communication directly or via the telephone switching station 3 or the ISP 4 with the registered contact destination. Thus, even when the character does not exist in the virtual world, the calling party in the virtual world can call the called party in the real world and conduct voice communication or data communication.

Since, when the contact destination registered in the user database 7 is the portable telephone 5 of the called party, the server machine 2 makes a call to the portable telephone 5 of the called party directly or via the telephone switching station 3 to call the called party, even when the called party is remote from the client terminal device 1 or the called party has not logged on to the server machine 2, voice communication can be conducted between the calling party and the called party.

On the other hand, when the contact destination has not been registered, the communication process goes to the processing in step S7.

In the processing in step S7, the server machine 2 notifies the calling party that the called party is absent. The calling party transmits a voice message for the called party from the client terminal device 1 to the server machine 2 in response to receiving the absence notice from the server machine 2. The server machine 2 transmits the voice message as a voice mail to the portable telephone 5 held by the character corresponded to the called party. Thus, when the called party next logs on to the virtual world, the called party can recognize that a call request has been issued from the other player while the called party has been logged off, and can confirm the message from the calling party by opening the voice mail. Further, the calling party can reliably transmit the message even to a called party who has not logged on to the server machine 2.

In the foregoing processing, the character operated by the other player is called of the player's own will, but, for example, the character may call the player voluntarily operating the character *per se* or the other player. Thus, it is possible to give to the player an illusion that the character in the virtual world exists in the real world, such as, for example, by unexpectedly calling the player from the character in the virtual world.

### Communication Operation from Real World to Virtual World

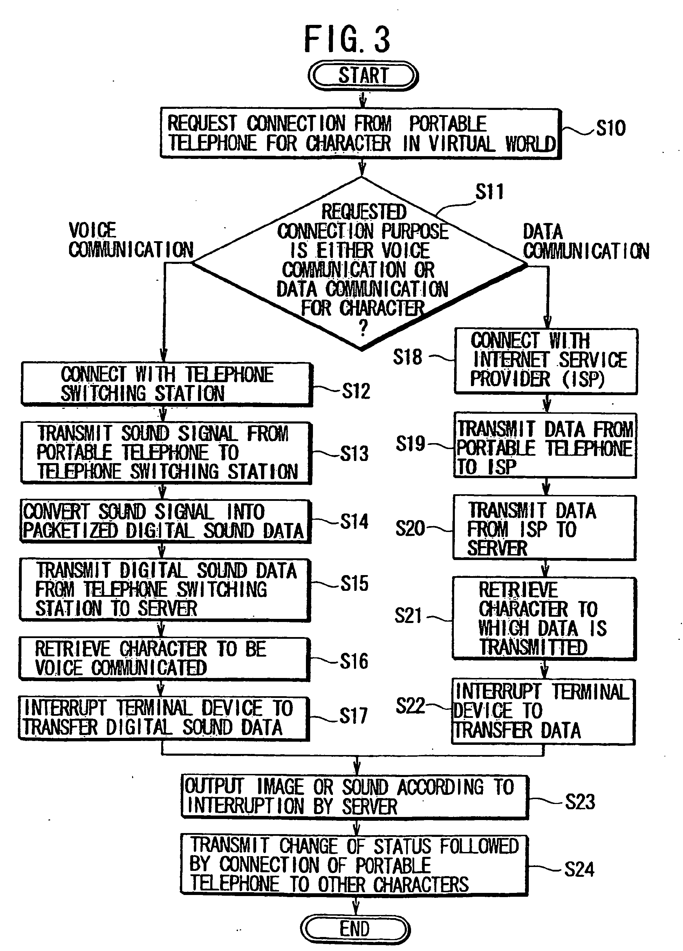

The operation of the foregoing network game system is not only the communication process between the characters in the virtual world, but may include communication, for example, from the real world to the virtual world. Hereinafter, with reference to FIG. 3, an operation of the network game system when the communication process is conducted from the real world to the virtual world will be explained.

The flow chart shown in FIG. 3 starts when the calling party turns ON the power supply of the portable telephone 5, and the communication process goes to the processing in step S10.

In the processing in step S10, the calling party utilizes the portable telephone 5 to output a request for voice communication or data communication for the character in the virtual world. The communication process then goes from the processing in step S10 to the processing in step S11.

Here, when requesting voice communication for the character in the virtual world, the calling party inputs the IP telephone number (IP: Internet Protocol) of the server machine 2 and the client ID to be called into the portable telephone 5. On the other hand, when requesting data communication for the character in the virtual world, the calling party inputs the data line access number to the ISP 4, the IP address corresponded to the server machine 2, and the client ID into the portable telephone 5. As data to be transmitted for the character, for example, various parameters in the virtual world, voice data or image data in digital form, and the like are employed.

In the processing in step S11, the portable telephone 5 refers to the information input by the calling party to determine whether the processing requested in step S10 is the transmission of voice communication or the transmission of data communication for the character. If it is determined that the requested processing is voice communication, the communication process goes to the processing in step S12.

In the processing in step S12, the portable telephone 5 makes a connection via the communication line with the telephone switching station 3, and transmits data in which the IP telephone number of the server machine 2 and information on the client ID of the client terminal device 1 to conduct the voice communication are packetized at the same time with the connection. The telephone switching station 3 refers to the IP telephone number of the server machine 2, and makes a VoIP connection via the Internet with the server machine 2. The communication process then goes from the processing in step S12 to step S13.

In the processing in step S 13, the calling party inputs the voice for the character. The portable telephone 5 sequentially converts the sound input by the calling party into a sound signal to be transmitted to the telephone switching station 3. The communication process then goes from the processing in step S13 to step S14.

In the processing in step S14, the telephone switching station 3 converts the sound signal from the analog form transmitted from the portable telephone 5 into sound data in the digital form and adds a header thereto. The telephone switching station 3 converts the sound data in the digital form into an IP packet to form IP packetized sound data in the digital form (hereinafter, referred to as digital sound data). The communication process then goes from the processing in step S14 to the processing in step S15.

In the processing in step S15, the telephone switching station 3 transmits the digital sound data and the client ID attached thereto via the Internet to the server machine 2. The communication process then goes from the processing in step S 14 to the processing in step S16.

In the processing in step S16, the server machine 2 compares the client ID transmitted from the portable telephone 5 with the client IDs stored in the log-in player database 8 to retrieve the character to conduct the voice communication (a player operating the character). The communication process then goes from the processing in step S16 to the processing in step S17. Here, in the processing in the foregoing step S16, as a result of the retrieval, when the character to conduct the voice communication does not exist in the virtual world, the user database 7 is referred to call the other contact destination of the called party.

In the processing in step S17, the server machine 2 interrupts the client terminal device I of the player corresponded to the client ID, and transfers the digital sound data transmitted from the telephone switching station 3 to the client terminal device 1. The communication process then goes from the processing in step S17 to the processing in step S23.

On the other hand, when the requested processing is data communication, the communication process goes to the processing in step S18.

In the processing in step S18, the portable telephone 5 makes a connection with the ISP 4 corresponded to the input data line access number, and transmits data to the ISP 4 in which the IP address corresponded to the server machine 2 and information on the client ID of the client terminal device 1 are packetized at the same time with the connection, as shown in FIG. 6. The ISP 4 refers to the IP address of the server machine 2, and connects with the server machine 2 via the Internet. The communication process then goes from the processing in step S18 to the processing in step S19.

In the processing in step S19, the player inputs the data to be transmitted for the character into the portable telephone 5, and the portable telephone 5 transmits the data to the ISP 4. The communication process then goes from the processing in step S 19 to the processing in step S20.

In the processing in step S20, the ISP 4 attaches the client ID to the data transmitted from the portable telephone 5, and transmits the data as packet data to the server machine 2. The communication process then goes from the processing in step S20 to the processing in step S21.

In the processing in step S21, the server machine 2 refers to the client IDs stored in the log-in player database 8 and the client ID transmitted from the ISP 4 to retrieve the character corresponded to the client ID (a player operating the character). The communication process then goes from the processing in step S21 to the processing in step S22.

In the processing in step S22, the sever machine 2 interrupts the client terminal device 1 corresponded to the client ID, and transmits the data transmitted by the ISP 4 to the client terminal device 1. The communication process then goes from the processing in step S22 to the processing in step S23.

When voice communication and data communication are conducted for the character in the virtual world via the Internet from the portable telephone 5 in accordance with the processings in step S12 to step S17 or step S18 to step S22, the communication process goes to the processing in step S23.

In the processing in step S23, the client terminal device 1 outputs to the output device 6 the image or sound which corresponds to the information transferred from the server machine 2. Thus, when a voice communication is received, the calling party can conduct the communication process with sound between the portable telephone 5 and the client terminal device 1. Further, when a data communication is received, the client terminal device 1 can receive the data transmitted from the portable telephone 5. Thereafter, the communication process goes from the processing in step S23 to the processing in step S24.

In the processing in step S24, the server machine 2 transmits information on the change of the status of the character which conducts the voice communication or the data communication with portable telephone 5 (in this case, the fact that the voice communication or the data communication has been conducted via the portable telephone 5) to the client terminal device 1 of the player operating the other character. The information to be transmitted to the client terminal device 1 of the other player, for example, may include an image or the like in which the character operated by the player who has received the voice communication answers the telephone. Thus, the player can recognize that the other player is conducting a communication process, so that the series of processing is completed.

### Second Embodiment

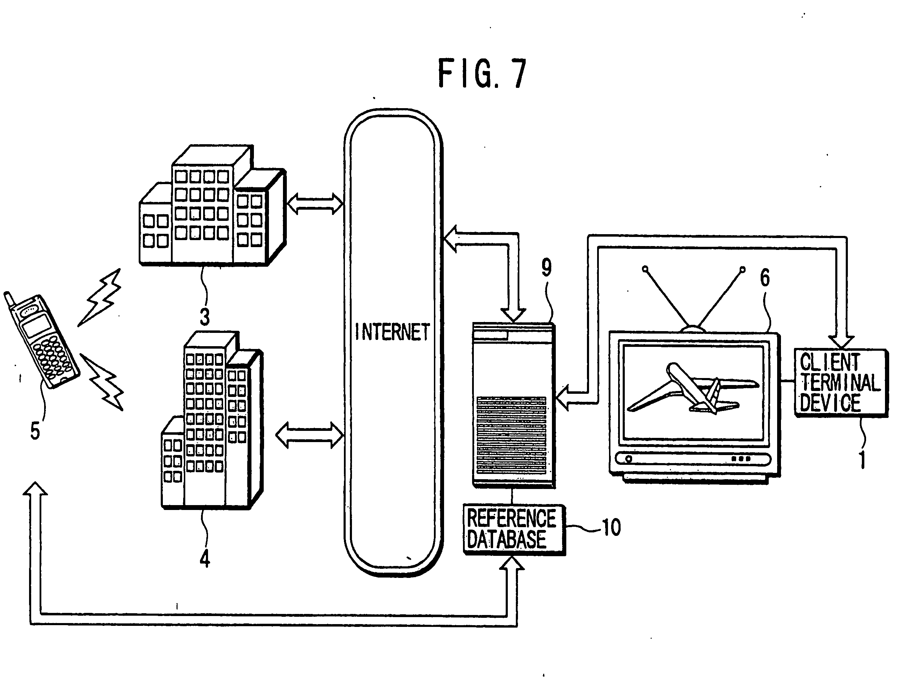

The present invention can be applied to a communication system composed of a dispatch server machine provided with an application program always executed on the client terminal device and a database for referring to the client terminal device connected to a communication line, for example, as shown in FIG. 7.

### Configuration of Communication System

Firstly, with reference to FIG. 7, the entire configuration of a communication system according to this embodiment of the present invention will be explained.

The network game system according to this embodiment of the present invention is configured, as shown in FIG. 7, so that the client terminal device 1 is connected to the portable telephone 5 via a dispatch server machine 9, the Internet, the telephone switching station 3, and the ISP 4.

The client terminal device 1 always executes an application program (hereinafter, simply referred to as a program) without need for user input. Further, the output device 6 is connected to the client terminal device 1 via electrical wiring. The output device 6 outputs various information along with the execution of the program, such as the result of executing the program, error information and the like, in accordance with instructions from the client terminal device 1. An example of the foregoing program is a computer program for constructing the virtual world.

The telephone switching station 3 is provided with a VoIP gateway for controlling voice communications with the dispatch server machine 9.

The ISP 4 is provided with an Internet server machine for controlling data communications with the dispatch server machine 9.

The portable telephone 5 is connected to the dispatch server machine 9 via the telephone switching station 3 or the ISP 4. Further, the dispatch server machine 9 is connected to the telephone switching station 3 or the ISP 4 via the Internet. Here, when the dispatch server machine 9 *per se* has a function of conducting voice communications or data communications, the portable telephone 5 is directly connected to the dispatch server machine 9.

The dispatch server machine 9 is directly connected to the telephone switching station 3 or the ISP 4 via the Internet. Further, the dispatch server machine 9 has a reference database 10 having recorded therein information on the identifiers of the client terminal devices 1 connected via the communication line or information on the programs executed on the client terminal devices 1.

### Communication Operation from Portable Telephone to Application Program

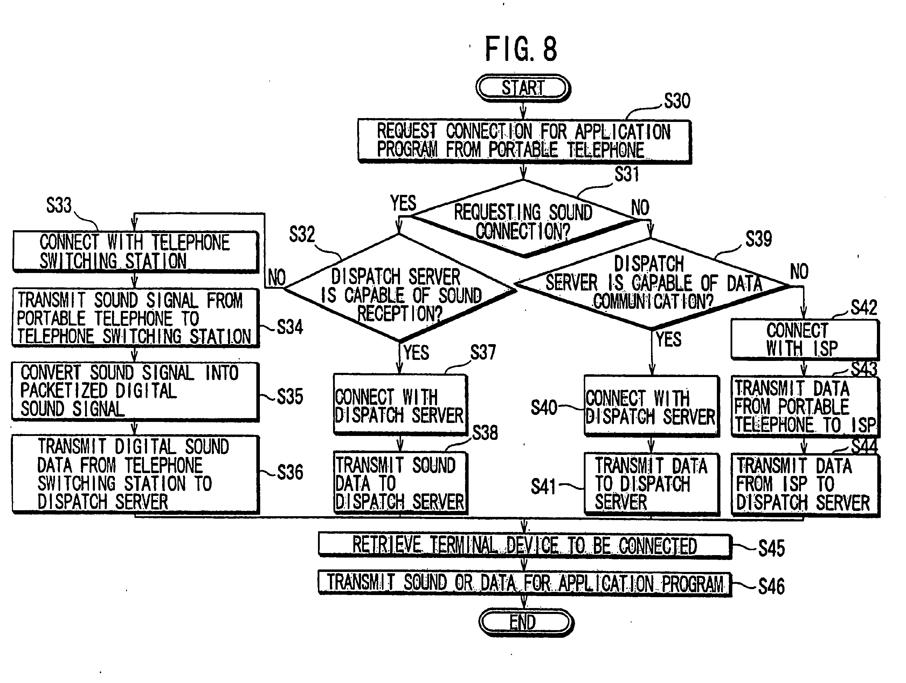

Next, with reference to the flow chart shown in FIG. 8, the operation of the foregoing communication system when a communication is conducted from the portable telephone to the application program will be explained.

The flow chart shown in FIG. 8 starts when the user turns ON the power supply of the portable telephone 5, and the communication process then goes to the processing in step S30.

In the processing in step S30, the user utilizes the portable telephone 5 to output a request to connect to the program executed on the client terminal device 1. The communication process then goes from the processing in step S30 to the processing in step S31.

In addition, when requesting a sound connection, the user inputs into the portable telephone 5 the IP telephone number of the dispatch server machine 9 and the identifier of the client terminal device 1 having the program to be connected. On the other hand, when requesting data communication for the program, the user inputs into the portable telephone 5 the data line access number to the ISP 4, the IP address of the dispatch server machine 9, and the identifier of the client terminal device 1 having the program to conduct the data communication. When the sound communication or the data communication can be directly conducted between the portable telephone 5 and the dispatch server machine 9, the user inputs the telephone number of the dispatch server machine 9 and the identifier of the client terminal device 1.

In the processing in step S31, the portable telephone 5 refers to the information input from the user to determinate whether the processing requested in step S30 is a sound connection or data communication for the program. If it is determined that the requested processing is a sound connection, the communication processing goes to the processing in step S32.

In the processing in step S32, the portable telephone 5 refers to the information input from the user to determine whether the dispatch server machine 9 can receive the sound.

For example, when the user inputs the telephone number of the dispatch server machine 9, the portable telephone 5 determines that the dispatch server machine 9 can receive the sound. On the other hand, when the user inputs the IP telephone number of the dispatch server machine 9, the portable telephone 5 determines that the dispatch server machine 9 cannot receive the sound.

If it is determined that the dispatch server machine 9 can receive the sound, the communication process goes to the processing in step S37. On the contrary, if it is determined that the dispatch server machine 9 cannot receive the sound, the communication process goes to the processing in step S33.

In the processing in step S33, the portable telephone 5 makes a connection with the telephone switching station 3, and transmits the IP telephone number of the dispatch sever machine 9 and the identifier of the client terminal device 1 at the same time with the connection. The telephone switching station 3 makes a VoIP connection with the dispatch server machine 9 via the Internet in accordance with the IP telephone number of the dispatch server machine 9. The communication process then goes from the processing in step S33 to step S34.

In the processing in step S34, the user inputs the sound for the program. The portable telephone 5 sequentially converts the contents of the sound input by the user into a sound signal and transmits the signal to the telephone switching station 3. The communication process then goes from the processing in step S34 to step S35.

In the processing in step S35, the telephone switching station 3 forms digital sound data from the sound signal in the analog form transmitted from the portable telephone 5. The communication process then goes from the processing in step S35 to step S36.

In the processing in step S36, the telephone switching station 3 transmits the digital sound data and the identifier of the client terminal device 1 attached thereto via the Internet to the dispatch server machine 9. The communication process then goes from the processing in step S36 to the processing in step S45.

In the processing in step S37, the portable telephone 5 refers to the telephone number of the dispatch server machine 9, makes a connection with the dispatch server machine 9, and transmits the identifier of the client terminal device 1 at the same time with the connection. The communication process then goes from the processing in step S37 to step S38.

In the processing in step S38, the user utilizes the portable telephone 5 to input the sound for the program. The portable telephone 5 sequentially converts the contents of the sound input by the user into sound data, and transmits the sound data to the dispatch server machine 9. The communication process then goes from the processing in step S38 to step S45. On the other hand, when the requested processing is data communication, the communication process goes to the processing in step S39.

In the processing in step S39, the portable telephone 5 refers to the contents input from the user to determinate whether data communication can be directly conducted for the dispatch server machine 9.

For example, when the user inputs the telephone number of the dispatch server machine 9, the portable telephone 5 determines that data communication can be directly conducted with the dispatch server machine 9. On the other hand, when the data line access number to the ISP 4 and the IP address of the dispatch server machine 9 are input, the portable telephone 5 determines that data communication cannot be directly conducted with the dispatch server machine 9.

If it is determined that data communication can be directly conducted with the dispatch server machine 9, the communication process goes to the processing in step S40. On the contrary, when data communication cannot be directly conducted, the communication process goes to the processing in step S42.

In the processing in step S40, the portable telephone 5 refers to the telephone number of the dispatch server machine 9, and makes a data connection to the dispatch server machine 9. The communication process then goes from the processing in step S40 to step S41.

In the processing in step S41, the user utilizes the portable telephone 5 to input the data for the program. The portable telephone 5 transmits the input data and the identifier of the client terminal device 1 to the dispatch server machine 9. The communication process then goes from the processing in step S41 to step S45.

In the processing in step S42, the portable telephone 5 makes a connection with the ISP 4 corresponded to the input data line access number, and transmits the IP address corresponded to the dispatch server machine 9 and the identifier of the client terminal device 1 to the ISP 4 at the same time with the connection. The ISP 4 refers to the IP address of the dispatch server machine 9, and makes a connection with the dispatch server machine 9 via the Internet. The communication process then goes from the processing in step S42 to the processing in step S43.

In the processing in step S43, the user inputs the data to be transmitted for the program into the portable telephone 5, and the portable telephone 5 transmits the data to the ISP 4. The communication process then goes from the processing in step S43 to the processing in step S44.

In the processing in step S44, the ISP 4 attaches the identifier of the client terminal device 1 to the data transmitted from the portable telephone 5, and transmits the data as packet data to the dispatch server machine 9. The communication process then goes from the processing in step S44 to the processing in step S45.

When the sound or the data is transmitted to the dispatch server machine 9 according to the foregoing processing, the communication process goes to the processing in step S45.

In the processing in step S45, the dispatch server machine 9 refers to the identifier stored in the reference database 10 and the transmitted identifier, and retrieves the client terminal device 1 to be connected. The communication process then goes from the processing in step S45 to the processing in step S46.

In the processing in step S46, the dispatch server machine 9 interrupts the program of the client terminal device 1 corresponded to the transmitted identifier, and transfers the transmitted sound or data to the program. This enables the user to conduct various controls with sound or data for the program executed on the client terminal device 1, so that the series of communication processing is completed.

Note that, when the portable telephone 5 is utilized to communicate with the program executed on the client terminal device 1, the dispatch server machine 9 may be configured to refer to the reference database 10 and transmit to the portable telephone 5 a list of the user names of the client terminal devices 1 connected via the communication line or the program names executed on the client terminal devices 1. According to such a configuration, it is possible for the user to refer to the contents of the list to, for example, communicate with the program of the other user or select a desired program from among a plurality of programs executed on one client terminal device.

### Communication Operation from Application Program to Portable Telephone

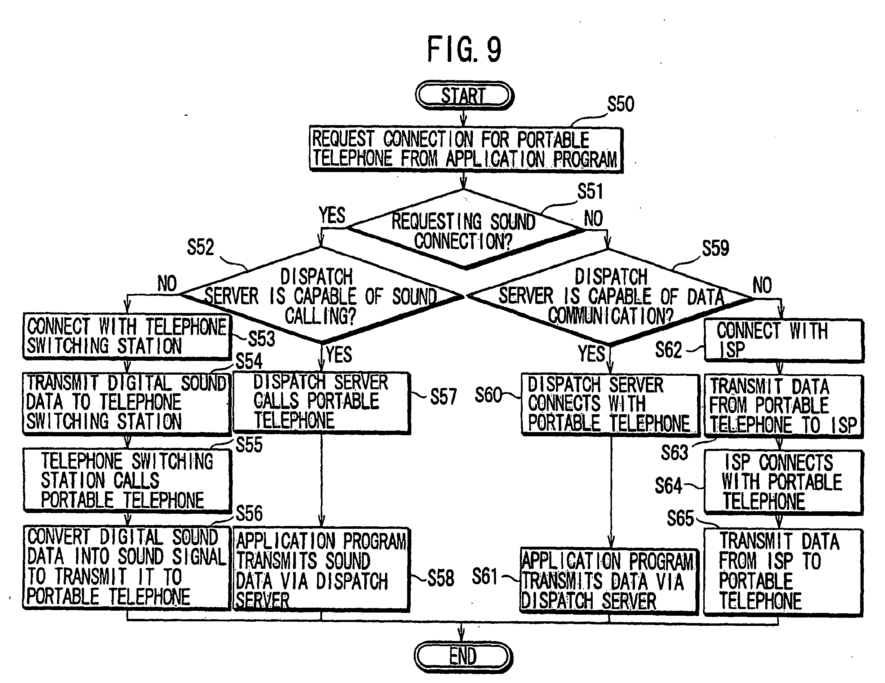

The operation of the foregoing communication system is not only the communication process from the portable telephone to the program, but the program may be configured so as to communicate with the portable telephone as necessary. Hereinafter, with reference to FIG. 9, an operation of the foregoing communication system when communication is conducted from the program to the portable telephone will be explained.

The flow chart shown in FIG. 9 starts when the program executed on the client terminal device 1 becomes a processing status set in advance, and the communication process goes to the processing in step S50. Here, as the processing status set in advance, for example, for an error time, a condition such as a predetermined elapsed time is provided.

In the processing in step S50, the client terminal device 1 outputs the connection request to the portable telephone 5 of the user registered in advance in the dispatch server machine 9. The communication process then goes from the processing in step S50 to the processing in step S51.

In the processing in step S51, the dispatch server machine 9 determines whether the processing requested in step S50 is a sound connection or data communication for the portable telephone 5 of the user registered in advance. The processing in which the program makes a sound connection with the portable telephone 5 is used, for example, when digital sound data such as a program-having message is reproduced or when an alarm warning for the user in a remote place is issued. If it is determined that the requested processing is a sound connection, the communication process goes to the processing in step S52.

In the processing in step S52, it is determined whether the dispatch server machine 9 is capable of telephone calling. If it is determined that the dispatch server machine 9 is capable of telephone calling, the communication process goes to the processing in step S57. On the contrary, when telephone calling is not possible, the communication process goes to the processing in step S53.

In the processing in step S53, the dispatch server machine 9 makes a VoIP connection via the Internet with the telephone switching station 3. The communication process then goes from the processing in step S53 to step S54.

In the processing in step S54, the program transmits to the telephone switching station 3 the digital sound data and the telephone number of the portable telephone 5 to be called via the dispatch server machine 9. The communication process then goes from the processing in step S54 to step S55.

In the processing in step S55, the telephone switching station 3 calls the portable telephone 5. The communication process then goes from the processing in step S55 to step S56.

In the processing in step S56, the telephone switching station 3 converts the digital sound data into an analog sound signal to transmit the sound signal to the portable telephone 5, so that the series of processing steps are completed.

In the processing in step S57, the dispatch server machine 9 calls the portable telephone in accordance with the telephone number designated by the program. The communication process then goes from the processing in step S57 to step S58.

In the processing in step S58, the program transmits the sound data to the dispatch server machine 9. The dispatch server machine 9 transmits the sound data transmitted from the program to the portable telephone 5, so that the series of processing steps are completed.

On the other hand, when the requested processing is data communication, the communication processing goes to the processing in step S59.

In the processing in step S59, it is determined whether the dispatch server machine 9 is capable of data communication. If it is determined that the dispatch server machine 9 is capable of data communication, the communication process goes to the processing in step S60. On the contrary, when the dispatch server machine 9 is not capable of data communication, the communication process goes to the processing in step S62.

In the processing in step S60, the dispatch server machine 9 makes a connection with the portable telephone in accordance with the telephone number designated by the program. The communication process then goes from the processing in step S60 to step S61.

In the processing in step S61, the program transmits the data to the dispatch server machine 9. The dispatch server machine 9 transmits the data to the connected portable telephone 5, so that the series of processing steps are completed.

In the processing in step S62, the dispatch server machine 9 makes a connection with the ISP 4 via the Internet. The communication process then goes from the processing in step S62 to step S63.

In the processing in step S63, the program transmits to the dispatch server machine 9 the data and the telephone number of the portable telephone 5 to which the data is to be transmitted. The dispatch server machine 9 transmits via the Internet to the ISP 4 the data and the telephone number of the portable telephone 5 to which the data is to be transmitted. The communication process then goes from the processing in step S63 to step S64.

In the processing in step S64, the ISP 4 makes a connection with the portable telephone 5 in accordance with the telephone number transmitted by the program. The communication process then goes from the processing in step S64 to step S65.

In the processing in step S65, the ISP 4 transmits the digital data transmitted from the dispatch server machine 9 to the portable telephone 5. Thus, the series of processing steps are completed.

As is clear from the foregoing description, since, in the entertainment system and the communication system according to the embodiments of the present invention, the portable telephone can be utilized to conduct voice communication or data communication with a program executed in a remote place, the user can transmit/receive various information, including sound information, to/from the program wherever he/she is.

Further, since, when the program is a network game program provided by the server machine via the communication line, voice communication or data communication can be conducted between the virtual world realized with the network game program and the portable telephone in the real world, even when the user is remote from the client terminal device, the information can be transmitted to/received from the virtual world. This gives the player the illusion that the virtual world is the real world, and realizes a linking between the virtual world and the real world.

Furthermore, since, when the program is always executed on the client terminal device, voice communication or data communication can be conducted between the program and the portable telephone, even when the user is remote from the client terminal device, he/she can control the program. Further, it is possible to transmit from the program a message, such as an alarm warning to the user in a remote place. This enables a linking between the program and the user to be realized.

Further, since the entertainment system according to the embodiment of the present invention can conduct information communication with other characters in the virtual world via the virtual communication terminals respectively owned by the characters in the virtual world, it is possible to enhance the reality and entertainment quality of the network game system.

### Other Embodiments

So far, the invention made by the present inventors has been described according to the foregoing embodiments. However, the description and drawings which form part of the disclosure do not limit the invention. The disclosure will make various alternative embodiments, examples, and operation techniques apparent to those skilled in the art.

For example, in the foregoing embodiments, the portable telephone 5 is utilized to conduct the communication processing, but the present invention is not limited thereto, and any devices having a communication function can be employed, such as a portable information terminal (Personal Digital Assistants: PDA), a beeper, a transceiver, and the like.

Further, the operation of the communication system according to the foregoing embodiment may be programmed to be stored in a computer-readable recording medium. When the communication operation is conducted, the communication process according to the embodiment of the present invention can be realized by making a computer read this recording medium, storing the program in a storage section, such as a memory in the computer system, and executing a communication program in a processing unit. The recording medium includes a computer-readable recording medium and the like capable of recording the programs, such as a semiconductor memory, a magnetic disk, an optical disk, a magnet-optical disk, a magnet tape and the like.

### INDUSTRIAL APLICABILITY

The present invention can be applied to a network game system in which a server machine and a plurality of client terminal devices are connected via a communication line and a plurality of players operate the client terminal devices and play in a virtual world constructed by the server machine.

## Claims

1. An entertainment system, comprising:
a server machine (2);
at least one terminal device (1) connectable via a first communication line to the server machine, at least one of the server machine (2) and the terminal device (1) being configured for constructing a virtual world and each terminal device being adapted for use by players to operate in a virtual world characters assigned to the players;
a log-in player database (8) having stored therein identification information for the terminal device (1) connected to the server machine (2);
a determination means for determining whether the terminal device (1) of the second player is connected to the server machine (2) by referring to the log-in player database (8) in response to a request from a first player to communicate with a second player while the first player is operating a character;
**characterized in that** the entertainment system further comprises:
a calling means for calling a registered communication destination of the second player when the terminal device (1) of the second player is not connected to the server machine (2); and
a communication means for establishing a voice communication line between the terminal device (1) of the first player and the communication destination when the communication destination called by the calling means responds to the call, and performing a bidirectional voice communication process,
wherein the communication means is adapted to establish the voice communication line between the terminal devices (1) of the first player and the second player and to perform the bidirectional voice communication process when the terminal device (1) of the second player is connected to the server machine (2).

2. The entertainment system according to claim 1, further comprising:
a communication device (5) connectable via a second communication line to the server machine (2), wherein
the determination means refers to the log-in player database to determine whether the terminal device (1) of the second player is connected to the server machine (2) in response to a request from the communication device (5) to communicate with a character operated by the second player, and
the communication means establishes the voice communication line between the communication device (5) and the terminal device (1) of the second player and performs the bidirectional voice communication process when the terminal device of the second player is connected to the server machine.

3. The entertainment system according to claim 1 or 2, wherein
the server machine (2) is configured to construct the virtual world where the respective characters own a portable terminal device and when the terminal device (1) of the second player is connected to the server machine (2), the server machine (2) transmits to the terminal device (1) of the second player an image and sound representing a call to the portable terminal device of the character operated by the second player.

4. The entertainment system according to any one of claims 1 to 3, wherein, when the communication destination does not respond to the call, the server machine (2) receives voice communication content from a communication request source, converts the voice communication content into a voice mail, and transmits the voice mail to the character operated by the second player.

5. The entertainment system according to any one of claims 1 to 4, wherein sound information is communicated after being converted to packetized digital data.

6. The entertainment system according to claim 1, wherein:
a first one of the terminal devices (1) is configured for constructing a virtual world;
the server machine (9) includes a database (10) having stored therein identification information for the terminal device (1);
a communication device (5) connectable to the server machine (9) via a second communication line transmits to the server machine (9) through the second communication line identification information of the first terminal device (1) constructing the virtual world to be communicated with,
the second communication line is adapted for voice communication and the communication device (5) performs bidirectional voice communication of sound information with the virtual world via the server machine (9) and
the server machine (9) refers to the transmitted identification information of the terminal device and the identification information stored in the database (10) to establish the voice communication between the communication device (5) and the virtual world.

7. The entertainment system according to claim 6, wherein the virtual world transmits sound information via the server machine (9) and the second communication line to the communication device (5) in response to a predetermined processing status.

8. The entertainment system according to claims 5 or 7. the communication device (5) and the server machine (9) are configured to communicate the sound information after having converted it to packetized digital data.

9. A communication method, comprising the steps of:
determining whether a character exists in a virtual world in response to a request to communicate with the character in the virtual world;
establishing a first communication line adapted for voice communication between the communication request source and a terminal device (1) of a player operating the character when the character exists in the virtual world to perform bidirectional voice communication process :
**characterized by** the steps of:
calling a communication destination registered by the player operating the character when the character does not exist in the virtual world; and
establishing the voice communication through the first communication line between the communication request source and the communication destination when the communication destination responds to the call to perform bidirectional voice communication process.

10. The communication method according to claim 9. wherein each character in the virtual world owns a portable terminal device, the method further comprising the step of:
transmitting to the terminal device (1) of the player operating the character an image and sound representing a call to the portable terminal device of the character when the character exists in the virtual world.

11. The communication method according to claim 9 or 10, further comprising:
when the communication destination does not respond to the call, receiving voice communication content from the communication request source, converting the voice communication content into a voice mail, and transmitting the voice mail to the character.

12. The communication method according to any one of claims 9 to 11. further comprising the step of:
converting the sound information into packetized digital data.

13. The communication method according to claim 9, further comprising the steps of
- referring to an identifier of the terminal device (1), said identifier being transmitted by a communication device (5) to a server machine (9) and stored therein,
- establishing via the server machine (9) a second communication line between the communication device (5) and the virtual world constructed on the terminal device (1) corresponding to the identifier, and
performing a bidirectional voice communication of sound information between the communication device (5) and the virtual world through the second communication line to establish the first communication line.

14. The communication method according to claim 13, further comprising the step of:
converting the sound information into packetized digital data.

## Patentansprüche

1. Unterhaltungssystem, umfassend:
ein Servergerät (2);
wenigstens ein Endgerät (1), das über eine erste Kommunikationsverbindung mit dem Servergerät verbunden werden kann, wobei wenigstens ein Gerät aus Servergerät (2) und Endgerät (1) zum Aufbau einer virtuellen Welt geeignet ist und sich jedes Endgerät dazu eignet, dass Nutzer damit Figuren, die ihnen zugeordnet sind, in einer virtuellen Welt steuern;
eine Log-in-Spielerdatenbank (8) mit darin gespeicherter Identifikationsinformation in Bezug auf das mit dem Servergerät (2) verbundene Endgerät (1);
eine Ermittlungseinrichtung zum Ermitteln, ob das Endgerät (1) eines zweiten Spielers mit dem Servergerät (2) verbunden ist, indem auf Anfrage eines ersten Spielers zur Kommunikation mit dem zweiten Spieler Bezug auf die Log-in-Spielerdatenbank (8) genommen wird, wobei der erste Spieler eine Figur steuert;
**dadurch gekennzeichnet, dass** das Unterhaltungssystem zusätzlich umfasst:
eine Anrufeinrichtung zum Anrufen eines registrierten Kommunikationsziels des zweiten Spielers, sofern das Endgerät (1) des zweiten Spielers mit dem Servergerät (2) verbunden ist; und
eine Kommunikationseinrichtung zum Aufbauen einer Sprach-Kommunikationsverbindung zwischen dem Endgerät (1) des ersten Spielers und dem Kommunikationsziel, sofern das von der Anrufeinrichtung angerufene Kommunikationsziel den Anruf erwidert, sowie zum Durchführen eines bidirektionalen Sprach-Kommunikationsvorgangs,
wobei sich die Kommunikationseinrichtung zum Aufbauen der Sprach-Kommunikationsverbindung zwischen den Endgeräten (1) des ersten Spielers und des zweiten Spielers eignet, sowie zum Durchführen des bidirektionalen Sprach-Kommunikationsvorgangs, falls das Endgerät (1) des zweiten Spielers mit dem Servergerät (2) verbunden ist.

2. Unterhaltungssystem nach Anspruch 1, zusätzlich umfassend:
ein Kommunikationsgerät (5), das über eine zweite Kommunikationsverbindung mit dem Servergerät (2) verbunden werden kann, wobei
die Ermittlungseinrichtung auf Anfrage des Kommunikationsgeräts (5) zur Kommunikation mit einer von dem zweiten Spieler gesteuerten Figur auf die Log-in-Spielerdatenbank Bezug nimmt, um zu Ermitteln, ob das Endgerät (1) des zweiten Spielers mit dem Servergerät (2) verbunden ist,
die Kommunikationseinrichtung die Sprach-Kommunikationsverbindung zwischen dem Kommunikationsgerät (5) und dem Endgerät (1) des zweiten Spielers aufbaut und den bidirektionalen Sprach-Kommunikationsvorgang durchführt, falls das Endgerät des zweiten Spielers mit dem Servergerät verbunden ist.

3. Unterhaltungssystem nach Anspruch 1 oder 2, wobei
das Servergerät (2) zum Aufbau der virtuellen Welt geeignet ist, in der die entsprechenden Figuren einem tragbaren Endgerät zugehörig sind und wobei im Falle, dass das Endgerät (1) des zweiten Spielers mit dem Servergerät (2) verbunden ist, das Servergerät (2) dem Endgerät (1) des zweiten Spielers Bild und Ton übermittelt, welche einen Anruf des tragbaren Endgeräts der von dem zweiten Spieler gesteuerten Figur darstellen.

4. Unterhaltungssystem nach einem der Ansprüche 1 bis 3, wobei im Falle, dass das Kommunikationsziel den Anruf nicht erwidert, das Servergerät (2) einen Sprachkommunikationsinhalt einer Kommunikationsanforderungsquelle empfängt, den Sprachkommunikationsinhalt in eine Sprachsendung umwandelt und die Sprachsendung der von dem zweiten Spieler gesteuerten Figur übermittelt.

5. Unterhaltungssystem nach einem der Ansprüche 1 bis 4, wobei Toninformation nach Umwandlung in gepackte digitale Daten übertragen wird.

6. Unterhaltungssystem nach Anspruch 1, wobei:
ein erstes der Endgeräte (1) sich zum Aufbau einer virtuellen Welt eignet;
das Servergerät (9) eine Datenbank (10) enthält, die darin gespeicherte Identifikationsinformation in Bezug auf das Endgerät (1) enthält;
ein Kommunikationsgerät (5), das über eine zweite Kommunikationsverbindung mit dem Servergerät (9) verbunden werden kann, dem Servergerät (9) über die zweite Kommunikationsverbindung Identifikationsinformation in Bezug auf das erste Endgerät (1) übermittelt, wobei das erste Endgerät (1) die virtuelle Welt aufbaut, mit der kommuniziert werden soll,
die zweite Kommunikationsverbindung sich zur Sprachkommunikation eignet und das Kommunikationsgerät (5) mit der virtuellen Welt über das Servergerät (9) eine bidirektionale Sprachkommunikation mit Toninformation durchführt und
das Servergerät (9) Bezug auf die übermittelte Identifikationsinformation des Endgeräts und die in der Datenbank (10) gespeicherte Identifikationsinformation nimmt, um die Sprachkommunikation zwischen dem Kommunikationsgerät (5) und der virtuellen Welt aufzubauen.

7. Unterhaltungssystem nach Anspruch 6, wobei die virtuelle Welt als Reaktion auf einen vorgegebenen Bearbeitungsstatus Toninformation über das Servergerät (9) und die zweite Kommunikationsverbindung zum Kommunikationsgerät (5) übermittelt.

8. Unterhaltungssystem nach Anspruch 5 oder 7, wobei das Kommunikationsgerät (5) und das Servergerät (9) geeignet sind zur Kommunikation von Toninformation nach deren Umwandlung in gepackte digitale Daten.

9. Kommunikationsverfahren, umfassend die Schritte:
Ermitteln, als Reaktion auf eine Anfrage zur Kommunikation mit der Figur in der virtuellen Welt, ob eine Figur in einer virtuellen Welt vorliegt;
Aufbauen einer ersten Kombinationsverbindung zur Sprachkommunikation zwischen der Kommunikationsanforderungsquelle und einem Endgerät (1) eines die in der virtuellen Welt vorliegende Figur steuernden Spielers, um einen bidirektionalen Sprachkommunikationsvorgang durchzuführen;
**gekennzeichnet durch** die Schritte:
Anrufen eines Kommunikationsziels, das von dem die Figur steuernden Spieler eingetragen wird, falls die Figur nicht in der virtuellen Welt existiert; und
Aufbauen der Sprachkommunikation über die erste Kommunikationsverbindung zwischen der Kommunikationsanforderungsquelle und dem Kommunikationsziel, falls das Kommunikationsziel den Anruf erwidert, um einen bidirektionalen Sprachkommunikationsvorgang durchzuführen.

10. Kommunikationsverfahren nach Anspruch 9, wobei jede Figur in der virtuellen Welt einem tragbaren Endgerät zugehörig ist und das Verfahren den zusätzlichen Schritt umfasst:
Übermitteln, an das Endgerät (1) des die Figur steuernden Spielers, von Bild und Ton, welche einen Anruf des tragbaren Endgeräts der Figur darstellen, sofern die Figur in der virtuellen Welt existiert.

11. Kommunikationsverfahren nach Anspruch 9 oder 10, zusätzlich umfassend:
sofern das Kommunikationsziel den Anruf nicht erwidert, Empfangen eines Sprachkommunikationsinhalts von der Kommunikationsanforderungsquelle, Umwandeln des Sprachkommunikationsinhalts in eine Sprachsendung und Übermitteln der Sprachsendung an die Figur.

12. Kommunikationsverfahren nach einem der Ansprüche 9 bis 11, zusätzlich umfassend den Schritt:
Umwandeln der Toninformation in gepackte digitale Daten.

13. Kommunikationsverfahren nach Anspruch 9, zusätzlich umfassend die Schritte
- Bezugnahme auf eine Kennzeichnung des Endgeräts (1), wobei die Kennzeichnung von einem Kommunikationsgerät (5) an ein Servergerät (9) übermittelt wird und im Servergerät gespeichert wird,
- Aufbauen, durch das Servergerät (9), einer zweiten Kommunikationsverbindung zwischen dem Kommunikationsgerät (5) und der virtuellen Welt, die auf dem Endgerät (1), welches der Kennzeichnung entspricht, ausgebildet ist, und
Durchführen, über die zweite Kommunikationsverbindung, einer bidirektionalen Sprachkommunikation mit Toninformation zwischen dem Kommunikationsgerät (5) und der virtuellen Welt, um die erste Kommunikationsverbindung aufzubauen.

14. Kommunikationsverfahren nach Anspruch 13, zusätzlich umfassend den Schritt:
Umwandeln der Toninformation in gepackte digitale Daten.

## Revendications

1. Système récréatif, comprenant :
un serveur (2) ;
au moins un dispositif terminal (1) pouvant être relié via une première ligne de communication au serveur, au moins l'un du serveur (2) et du dispositif terminal (1) étant configuré afin de construire un monde virtuel et chaque dispositif terminal étant adapté afin d'être utilisé par des joueurs de façon à incarner des personnages virtuels attribués aux joueurs ;
une base de données de joueurs à ouverture de sessions (8) stockant des informations d'identification pour le dispositif terminal (1) relié au serveur (2) ;
un moyen de détermination destiné à déterminer si le dispositif terminal (1) du second joueur est relié au serveur (2) en se rapportant à la base de données de joueurs à ouverture de sessions (8) en réponse à une requête d'un premier joueur souhaitant communiquer avec un second joueur - pendant que le premier joueur incarne un personnage ;
**caractérisé en ce que** le système récréatif comprend en outre :
un moyen d'appel destiné à appeler une destination de communication enregistrée du second joueur lorsque le dispositif terminal (1) du second joueur n'est pas relié au serveur (2) ; et
un moyen de communication destiné à établir une ligne de communication vocale entre le dispositif terminal (1) du premier joueur et la destination de la communication lorsque la destination de la communication appelée par le moyen d'appel répond à l'appel, et à effectuer un processus de communication vocale bidirectionnelle,
dans lequel le moyen de communication est adapté afin d'établir la ligne de communication vocale entre les dispositifs terminaux (1) du premier joueur et du second joueur et afin d'effectuer le processus de communication vocale bidirectionnelle lorsque le dispositif terminal (1) du second joueur est relié au serveur (2).

2. Système récréatif selon la revendication 1, comprenant en outre:
un dispositif de communication (5) pouvant être relié via une seconde ligne de communication au serveur (2), dans lequel
le moyen de détermination se rapporte à la base de données de joueurs à ouverture de sessions afin de déterminer si le dispositif terminal (1) du second joueur est relié au serveur (2) en réponse à une requête du dispositif de communication (5) souhaitant communiquer avec un personnage incarné par le second joueur, et
le moyen de communication établit la ligne de communication vocale entre le dispositif de communication (5) et le dispositif terminal (1) du second joueur et effectue le processus de communication vocale bidirectionnelle lorsque le dispositif terminal du second joueur est relié au serveur.

3. Système récréatif selon la revendication 1 ou 2, dans lequel
le serveur (2) est configuré afin de construire le monde virtuel dans lequel les personnages respectifs possèdent un dispositif terminal portable et, lorsque le dispositif terminal (1) du second joueur est relié au serveur (2), le serveur (2) transmet au dispositif terminal (1) du second joueur une image et un son représentant un appel vers le dispositif terminal portable du personnage incarné par le second joueur.

4. Système récréatif selon l'une quelconque des revendications 1 à 3, dans lequel, lorsque la destination de la communication ne répond pas à l'appel, le serveur (2) reçoit le contenu de la communication vocale de la part d'une source de requête de communication, convertit le contenu de la communication vocale en un message vocal, et transmet le message vocal au personnage incarné par le second joueur.

5. Système récréatif selon l'une quelconque des revendications 1 à 4, dans lequel des informations de son sont communiquées après avoir été converties en données numériques sous forme de paquets.

6. Système récréatif selon la revendication 1, dans lequel :
un premier des dispositifs terminaux (1) est configuré afin de construire un monde virtuel ;
le serveur (9) comprend une base de données (10) stockant des informations d'identification pour le dispositif terminal (1) ;
un dispositif de communication (5) pouvant être relié au serveur (9) via une seconde ligne de communication transmet au serveur (9), par le biais de la seconde ligne de communication, les informations d'identification du premier dispositif terminal (1) construisant le monde virtuel avec lequel la communication doit avoir lieu,
la seconde ligne de communication est adaptée pour une communication vocale et le dispositif de communication (5) effectue une communication vocale bidirectionnelle d'informations de son avec le monde virtuel via le serveur (9), et
le serveur (9) se rapporte aux informations d'identification transmises du dispositif terminal et aux informations d'identification stockées dans la base de données (10) afin d'établir la communication vocale entre le dispositif de communication (5) et le monde virtuel.

7. Système récréatif selon la revendication 6, dans lequel le monde virtuel transmet des informations de son via le serveur (9) et la seconde ligne de communication au dispositif de communication (5) en réponse à un statut de traitement prédéterminé.

8. Système récréatif selon les revendications 5 ou 7, le dispositif de communication (5) et le serveur (9) étant configurés afin de communiquer les informations de son après qu'elles aient été converties en données numériques sous forme de paquets.

9. Procédé de communication, comprenant les étapes consistant à :
déterminer si un personnage existe dans un monde virtuel en réponse à une requête de communication avec le personnage dans le monde virtuel ;
établir une première ligne de communication adaptée pour une communication vocale entre la source de la requête de communication et un dispositif terminal (1) d'un joueur incarnant le personnage lorsque le personnage existe dans le monde virtuel, afin d'effectuer un processus de communication vocale bidirectionnelle ;
**caractérisé par** les étapes consistant à :
appeler une destination de communication enregistrée par le joueur incarnant le personnage lorsque le personnage n'existe pas dans le monde virtuel ; et
établir la communication vocale par le biais de la première ligne de communication entre la source de la requête de communication et la destination de la communication lorsque la destination de la communication répond à l'appel, afin d'effectuer un processus de communication vocale bidirectionnelle.

10. Procédé de communication selon la revendication 9, dans lequel chaque personnage du monde virtuel possède un dispositif terminal portable, le procédé comprenant en outre l'étape consistant à :
transmettre au dispositif terminal (1) du joueur incarnant le personnage une image et un son représentant un appel vers le dispositif terminal portable du personnage lorsque le personnage existe dans le monde virtuel.

11. Procédé de communication selon la revendication 9 ou 10, comprenant en outre :
lorsque la destination de la communication ne répond pas à l'appel, la réception du contenu de la communication vocale de la part de la source de la requête de communication, la conversion du contenu de la communication vocale en un message vocal, et la transmission du message vocal au personnage.

12. Procédé de communication selon l'une quelconque des revendications 9 à 11, comprenant en outre l'étape consistant à :
convertir les informations de son en données numériques sous forme de paquets.

13. Procédé de communication selon la revendication 9, comprenant en outre les étapes consistant à
- se reporter à un identifiant du dispositif terminal (1), ledit identifiant étant transmis par un dispositif de communication (5) à un serveur (9), et stocké à l'intérieur,
- établir, via le serveur (9), une seconde ligne de communication entre le dispositif de communication (5) et le monde virtuel construit sur le dispositif terminal (1), correspondant à l'identifiant, et
- effectuer une communication vocale bidirectionnelle des informations de son entre le dispositif de communication (5) et le monde virtuel, par le biais de la seconde ligne de communication, afin d'établir la première ligne de communication.

14. Procédé de communication selon la revendication 13, comprenant en outre l'étape consistant à :
convertir les informations de son en données numériques sous forme de paquets.
